# EUROPÄISCHE PATENTSCHRIFT

(11) **EP 3 796 493 B1**
(45) Veröffentlichungstag und Bekanntmachung des Hinweises auf die Patenterteilung: **24.05.2023**
(21) Anmeldenummer: 20020412.1
(22) Anmeldetag: 11.09.2020
(51) Int. Cl.: H02G 1/00, B23B 31/12, B65B 13/04, H01B 13/012, H02G 3/32

(54) **VORRICHTUNG ZUR MONTAGE EINES HALTECLIPS AN EINEM LEITUNGSELEMENT**
DEVICE FOR ATTACHING A HOLDING CLIP TO A LINE ELEMENT
DISPOSITIF DE MONTAGE D'UN CLIP DE FIXATION SUR UN ÉLÉMENT DE CONDUITE

(30) Priorität: 18.09.2019 DE 202019105184 U
(43) Veröffentlichungstag der Anmeldung: 24.03.2021
(73) Patentinhaber: Komax Taping GmbH & Co. KG, 36151 Burghaun (DE)
(72) Erfinder: Schmelz, Steffen, 36419 Geisa (DE); Fladung, Hans Peter, 36169 Rasdorf (DE); Meeßen, Daniel, 36277 Schenklenksfeld (DE)
(74) Vertreter: Körner, Volkmar Horst

(56) Entgegenhaltungen:
- DE-U1-202013 009 153
- JP-A- H11 267 908

## Beschreibung

Die Erfindung betrifft eine Vorrichtung zur Montage eines Halteclips an einem Leitungselement,' mit einer Spanneinrichtung zur Einspannung des Halteclips und Ausrichtung des Halteclips gegenüber dem Leitungselement, mit einem Bündelkopf zur Führung eines mit dem Halteclip verbundenen oder verbindbaren Bandes um das Leitungselement, wobei die Spanneinrichtung ein Scheibenelement mit einer zentrischen Ausnehmung für das Leitungselement hat.

Eine solche Vorrichtung ist beispielsweise aus der DE 20 2013 009 153 U1 bekannt. Bei dieser Vorrichtung ist eine Positioniereinheit zur Positionierung eines Clips an einem Leitungsbündel als Scheibe mit einer zentrischen Ausnehmung für das Leitungsbündel ausgebildet. Ein Greifer führt den Clip der Positioniereinheit zu. Der Clip wird anschließend in der Scheibe gehalten und durch eine entsprechende Drehung gegenüber dem Leitungsbündel positioniert.

Aus der JP H11 267908 A ist eine Spannvorrichtung für eine Leitung mit drei drehbaren Scheiben bekannt geworden. Die Scheiben haben Spannpratzen zur axial unverschieblichen Halterung der Leitung.

Für eine exakte Positionierung des Halteclips gegenüber dem Leitungselement ist jedoch die genaue unverdrehbare Halterung des Halteclips in der Spanneinrichtung von wesentlicher Bedeutung. Beispielsweise können sich Halteclips drehen, wenn sie an einem daran angeordneten Zapfen oder Tannenbaumprofil gegriffen werden.

Der Erfindung liegt das Problem zugrunde, eine Vorrichtung der eingangs genannten Art so weiter zu bilden, dass sie eine besonders genaue Positionierung des Halteclips an dem Leitungselement ermöglicht.

Dieses Problem wird erfindungsgemäß entsprechend Anspruch 1 dadurch gelöst, dass die Spanneinrichtung zwei parallel angeordnete, um eine gemeinsame Drehachse gegeneinander verdrehbare Scheibenelemente mit zentrischen Ausnehmungen für das Leitungselement hat und dass die Scheibenelemente jeweils eine Spannbacke zur Halterung des Halteclips zwischend den Spannbacken aufweisen, wobei sich die Scheibenelemente gegeneinander verdrehen lassen, um damit die Spannbacken aufeinander zu oder voneinander wegzubewegen.

Durch diese Gestaltung sind die Spannbacken als Teil der Scheibenelemente ausgebildet. Da die Scheibenelemente die Halteclips gegenüber dem Leitungselement positionieren, sind dank der Erfindung Toleranzen zwischen dem Halteclip und den Scheibenelementen besonders gering gehalten. Weiterhin können die Spannbacken den Halteclip an einem festen Abschnitt, wie beispielsweise einem Anlenkbalken oder einem Steg halten und damit eine unverdrehbare Halterung des Halteclips bei der Positionierung am Leitungselement sicherstellen.

Nach dem Einspannen lässt sich der Halteclip gemäß einer vorteilhaften Weiterbildung der Erfindung einfach in eine vorgesehene Orientierung gegenüber dem Leitungselement bewegen, wenn die Scheibenelemente um die zentrischen Ausnehmungen synchron verdrehbar antreibbar sind.

Zur weiteren Erhöhung der Genauigkeit der Positionierung des Halteclips trägt es gemäß einer anderen vorteilhaften Weiterbildung der Erfindung bei, wenn die Scheibenelemente in ihrer Ebene bewegbar sind. Durch ihre Bewegbarkeit in der Ebene lassen sich die Scheibenelemente mit dem eingespannten Halteclip senkrecht zu dem Leitungselement verfahren. Insbesondere bei einem großen Durchmesser oder unrundem Querschnitt des Leitungselementes lässt sich der Halteclip hierdurch besonders genau gegenüber dem Leitungselement positionieren.

Halteclips haben meist einen Anlenkbalken zur Anlage an dem Leitungselement und ein von dem Anlenkbalken abstehendes Tannenbaumprofil zur Endmontage des Leitungselementes an einem weiteren Bauteil. Bei bekannten Vorrichtungen greifen die Spannbacken den Halteclip an dem Tannenbaumprofil. Nachteilig ist hierbei, dass sich der Halteclip in der Spanneinrichtung verdrehen kann. Zur weiteren Verbesserung der Orientierung des Halteclips an dem Leitungselement trägt es gemäß einer anderen vorteilhaften Weiterbildung der Erfindung bei, wenn die Spannbacken eine einem Anlenkbalken des Halteclips entsprechende Form aufweisen.

Die Scheibenelemente lassen sich gemäß einer anderen vorteilhaften Weiterbildung der Erfindung einfach mit dem eingespannten Halteclip auf das Leitungselement bewegen, wenn die Scheibenelemente C-förmig mit einer Einführöffnung für das Leitungselement gestaltet sind.

Die Verbindung des Halteclips mit dem Leitungselement gestaltet sich gemäß einer anderen vorteilhaften Weiterbildung der Erfindung besonders einfach, wenn der Bündelkopf zur Umwicklung des an dem Leitungselement gehaltenen Halteclips mit Band seitlich neben den Scheibenelementen angeordnet ist.

Ein von dem Tannenbaumprofil in beide Richtungen abstehender Anlenkbalken lässt sich in einem Arbeitsgang mit dem Band an dem Leitungselement befestigen, wenn die Scheibenelemente sandwichartig zwischen zwei Bündelköpfen angeordnet sind.

Die Einführung des Halteclips zwischen die Spannbacken könnte beispielsweise von der Einführöffnung aus oder von der Seite her erfolgen, da das Band in den Bündelköpfen gespannt ist. Die Halteclips lassen sich jedoch gemäß einer anderen vorteilhaften Weiterbildung der Erfindung ungehindert von den Bündelköpfen an das Leitungselement bewegen, wenn die Bündelköpfe zumindest um die Breite des Halteclips voneinander weg bewegbar geführt sind.

Die Beschickung der Spannbacken mit den Halteclips gestaltet sich gemäß einer anderen vorteilhaften Weiterbildung der Erfindung besonders einfach, wenn ein Clipgreifer zur Übergabe des Halteclips aus zumindest einem Vorratsmagazin zu den Spannbacken beweglich geführt ist. Zur Bevorratung unterschiedlicher Halteclips kann die Vorrichtung mehrere Vorratsmagazine aufweisen.

Eine große Beweglichkeit und vielseitige Einsetzbarkeit des Clipgreifers lässt sich gemäß einer anderen vorteilhaften Weiterbildung der Erfindung sicherstellen, wenn der Clipgreifer teleskopartig verfahrbar und schwenkbar gelagert ist.

Eine zuverlässige Ausrichtung des Leitungselementes lässt sich gemäß einer anderen vorteilhaften Weiterbildung der Erfindung erreichen, wenn von der Spannenrichtung aus gesehen hinter den Bündelköpfen jeweils ein Leitungsgreifer angeordnet ist.

Die Erfindung lässt zahlreiche Ausführungsformen zu. Zur weiteren Verdeutlichung ihres Grundprinzips ist eine davon in der Zeichnung dargestellt und wird nachfolgend beschrieben. Diese zeigt in
- Fig.1: perspektivisch eine Vorrichtung zur Montage eines Halteclips an einem Leitungselement,
- Fig.2: perspektivisch zwei Scheibenelemente beim Greifen eines Halteclips,
- Fig.3: vergrößert die Scheibenelemente aus Figur 1 mit einem Halteclip,
- Fig.4: eine Entnahme eines Halteclips aus einem Magazin,
- Fig.5: eine Übergabe eines Halteclips zu den Scheibenelementen,
- Fig.6: einen Bündelkopf der Vorrichtung aus Figur 1 zum Umwickeln des Halteclips und des Leitungselementes mittels eines Bandes.

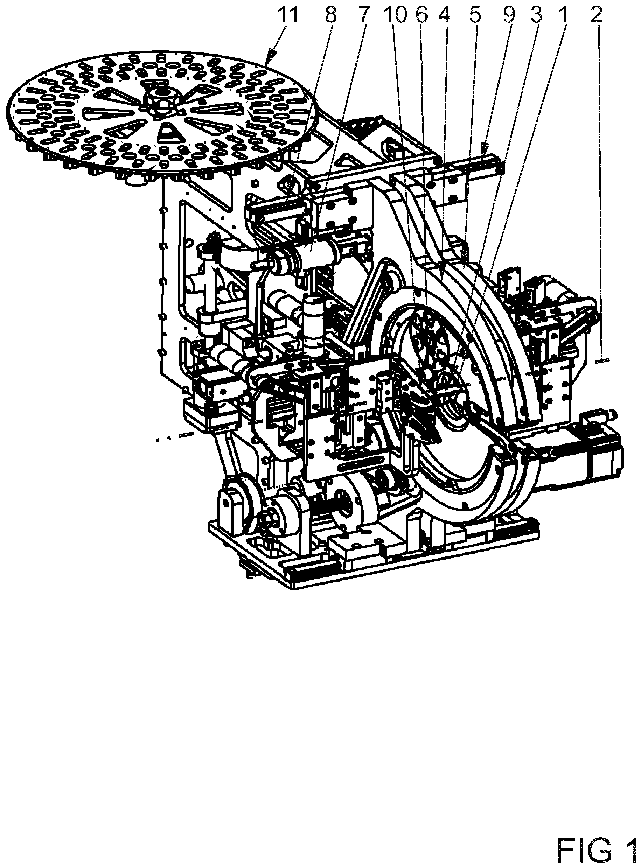

Figur 1 zeigt eine Vorrichtung zur Montage eines Halteclips 1 an einem Leitungselement 2. Bei dem Leitungselement 2 kann es sich um eine einzelne elektrische Leitung oder eine Schlauchleitung oder um ein Bündel einer Vielzahl von Leitungen handeln. Dieses Leitungselement soll mit dem Halteclip 1 beliebiger Bauart oder Größe in der vorgesehenen Orientierung und Position verbunden werden, um bei einer späteren Montage das Leitungselement 2 mittels des Halteclips 1 an einem weiteren Bauteil, beispielsweise in einem Kraftfahrzeug, zu befestigen. Zur Vereinfachung der Zeichnung ist das Leitungselement 2 nur strichpunktiert angedeutet.

Die Vorrichtung hat eine Spanneinrichtung 3 zur Halterung des Halteclips 1 und zwei Bündelköpfe 4 zur Umwicklung eines Teilbereichs des Halteclips 1 und des Leitungselementes 2 mit einem als Klebeband ausgebildeten Band 6. Die Bündelköpfe 4, 5 sind mittels eines motorischen Antriebs 7 auf Führungen 8, 9 parallel zur Längsachse des Leitungselementes 2 antreibbar. Weiterhin hat die Vorrichtung zwei von der Spanneinrichtung 3 gesehen hinter den Bündelköpfen 4, 5 angeordnete Leitungsgreifer 10 zum Greifen und Ausrichten des Leitungselementes 2. Die Leitungsgreifer 10 fixieren und spannen das Leitungselement 2 axial.

Die Vorrichtung hat zudem ein Vorratsmagazin 11 zur Bevorratung der Halteclips 1. Das Vorratsmagazin 11 kann unterschiedliche Typen und Größen von Halteclips 1 bevorraten. In einer anderen Ausführungsform können auch mehrere Vorratsmagazine 11 für unterschiedliche Halteclips 1 vorgesehen sein.

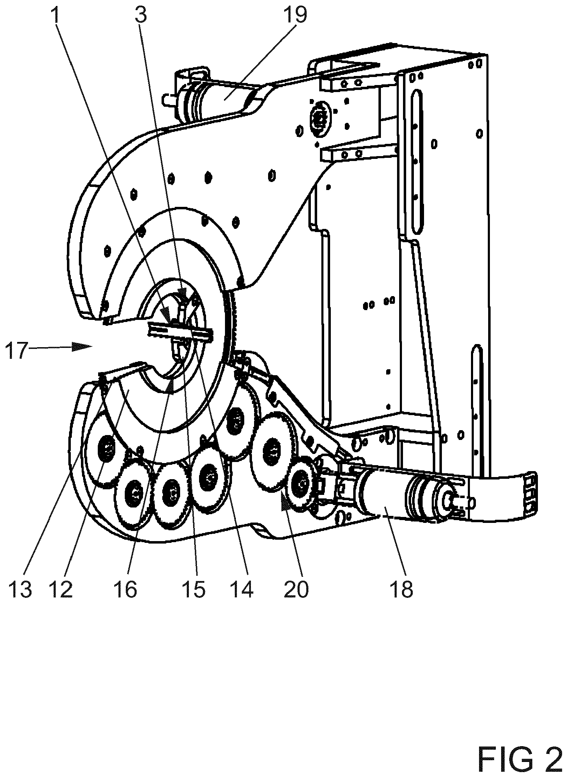

Figur 2 zeigt die Spanneinrichtung 3 mit dem Halteclip 1. Die Spanneinrichtung 3 hat zwei auf jeweils einem Scheibenelement 12, 13 angeordnete Spannbacken 14, 15. Die Scheibenelemente 12, 13 haben eine zentrische Ausnehmung 16 für das Leitungselement 2 und eine Öffnung 17 zum Einführen des Leitungselementes 2. Damit sind die Scheibenelemente 12, 13 mit der Öffnung 17 C-förmig gestaltet. Die Scheibenelemente 12, 13 lassen sich gegeneinander verdrehen und damit die Spannbacken 14, 15 aufeinander zu oder voneinander weg bewegen. Für die Verdrehung der Spannbacken 14, 15 haben die Scheibenelemente 12, 13 jeweils elektrische Antriebe 18, 19 und eine Reihe von Zahnrädern 20 zur Übertragung der Bewegungsenergie der Antriebe 18, 19 auf die Scheibenelemente 12, 13. Um den Halteclip 1 in der vorgesehenen Orientierung gegenüber dem in Figur 1 dargestellten Leitungselement 2 zu bewegen, können die Scheibenelemente 12, 13 mit dem Halteclip 1 synchron verdreht werden. Weiterhin können die Scheibenelemente 12, 13 in nicht dargestellten Führungen senkrecht zur Achse des Leitungselementes 2 bewegt werden.

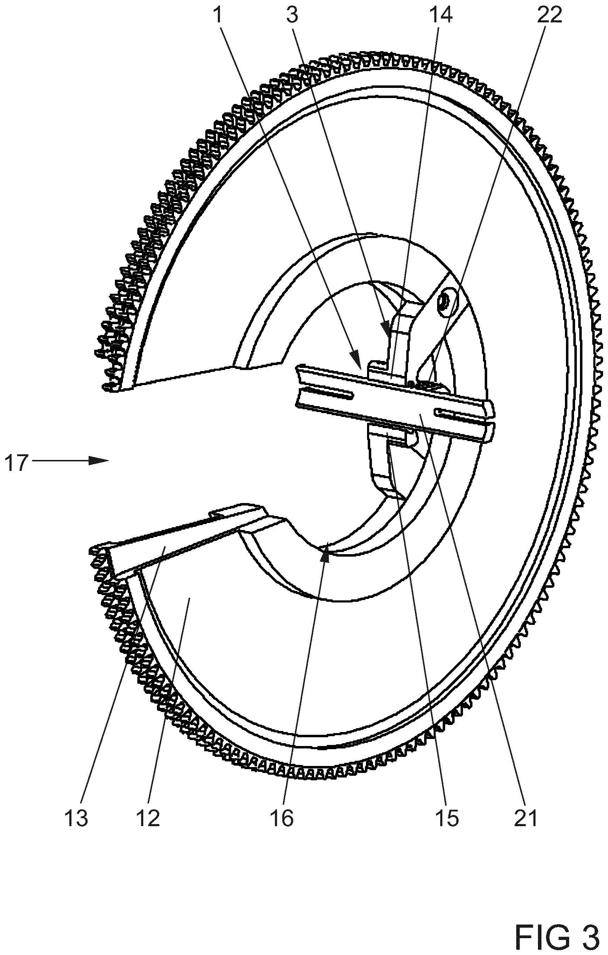

Figur 3 zeigt vergrößert die Scheibenelemente 12, 13 mit dem in der Spanneinrichtung 3 eingespannten Halteclip 1. Der Halteclip 1 ist in dieser Ausführungsform mit einem Anlenkbalken 21 versehen und hat ein Tannenbaumprofil 22. Die Spannbacken 14, 15 haben eine dem Anlenkbalken 21 entsprechende Kontur und haltern den Halteclip 1 damit am Anlenkbalken 21, so dass die Enden des Anlenkbalkens 21 überstehen und von den Bändern 6 der Bündelköpfe 4, 5 zusammen mit dem Leitungselement 2 umwickelt werden können. In einer anderen Ausführungsform kann der Halteclip 1 bereits ein Band aufweisen, welches bei entsprechender Gestaltung der Bündelköpfe 4, 5 um das Leitungselement 2 gewickelt werden kann.

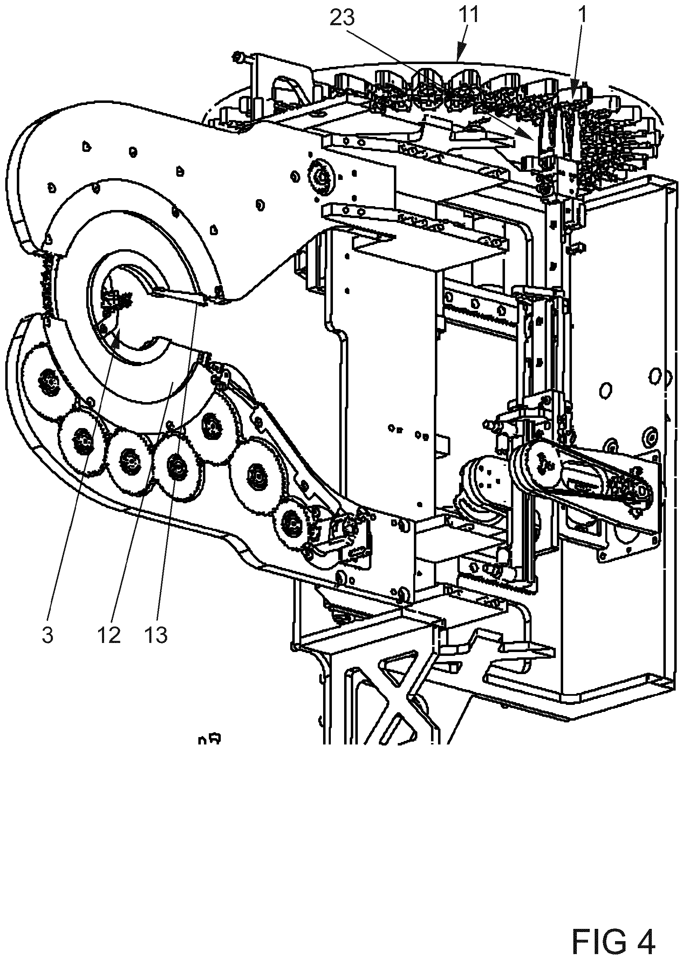

Figur 4 zeigt die Vorrichtung aus Figur 1 bei der Entnahme eines Halteclips 1 aus dem Vorratsmagazin 11. Ein Clipgreifer 23 ist schwenkbar gelagert und teleskopartig verfahrbar. Hierdurch kann der Clipgreifer 23 einen der Halteclips 1 aus dem Vorratsmagazin 11 greifen.

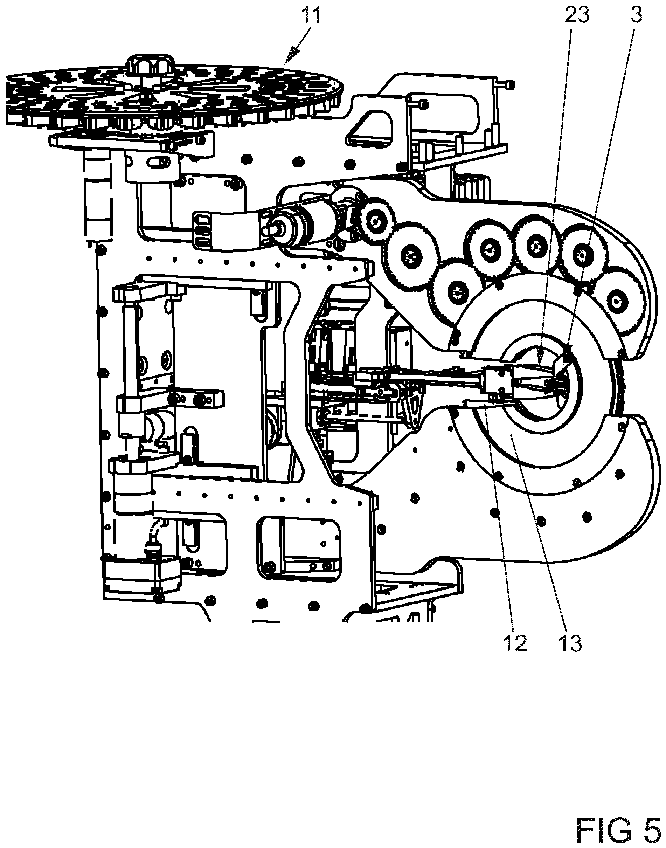

Figur 5 zeigt die Vorrichtung aus Figur 1 beim Beschicken der Spannvorrichtung 3 mit dem Halteclip 1. Ausgehend von der Position aus Figur 4 wurde der Clipgreifer 23 mit dem Halteclip 1 zu der Spanneinrichtung 3 bewegt. Die Scheibenelemente 12, 13 mit der Spanneinrichtung 3 wurden in eine Stellung bewegt, in der die Spanneinrichtung 3 aufnahmefähig für den Halteclip 1 ist. Durch Verdrehen der Scheibenelemente 12, 13 relativ zueinander wird der Halteclip 1 eingespannt. Anschließend kann der Clipgreifer 23 aus dem Bewegungsbereich der Scheibenelemente 12, 13 entfernt werden. Die in Figur 1 dargestellten Bündelköpfe 4, 5 sind bei dieser Beschickung axial auseinander bewegt.

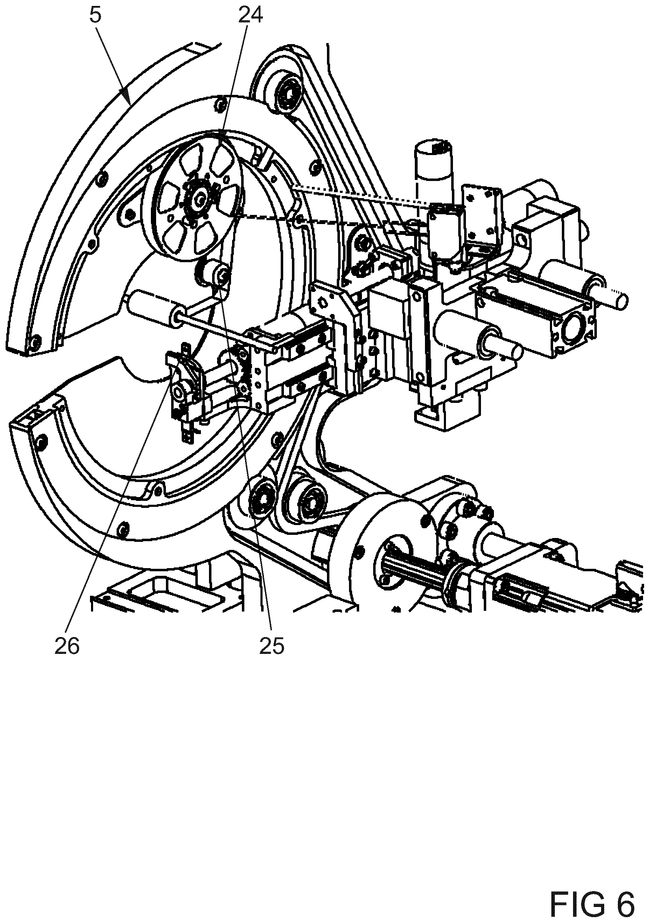

Figur 6 zeigt einen der Bündelköpfe 5. Der Bündelkopf 5 hat eine Vorratsrolle 24 mit dem Band 6, vorzugsweise Klebeband, eine Abzieheinrichtung 25 und eine Schneideinrichtung 26. Das Band 6 wird um das Leitungselement 2 und den Anlenkbalken 21 des Halteclips 1 um mehr als 360° herum geführt und die Enden Klebeseite auf Klebeseite miteinander verklebt. Anschließend wird überschüssiges Band abgeschnitten.

## Patentansprüche

1. Vorrichtung zur Montage eines Halteclips (1) an einem Leitungselement (2), mit einer Spanneinrichtung (3) zur Einspannung des Halteclips (1) und Ausrichtung des Halteclips (1) gegenüber dem Leitungselement (2), mit einem Bündelkopf (4, 5) zur Führung eines mit dem Halteclip (1) verbundenen oder verbindbaren Bandes (6) um das Leitungselement (2), wobei die Spanneinrichtung (3) ein Scheibenelement (12, 13) mit einer zentrischen Ausnehmung (16) für das Leitungselement (2) hat, **dadurch gekennzeichnet, dass** die Spanneinrichtung (3) zwei parallel angeordnete, um eine gemeinsame Drehachse gegeneinander verdrehbare Scheibenelemente (12, 13) mit zentrischen Ausnehmungen (16) für das Leitungselement (2) hat und dass die Scheibenelemente (12, 13) jeweils eine Spannbacke (14, 15) zur Halterung des Halteclips (1)
zwischen den Spannbacken (14, 15) aufweisen, wobei sich die Scheibenelemente (12, 13) gegeneinander verdrehen lassen, um damit die Spannbacken (14, 15) aufeinander zu oder voneinander wegzubewegen.

2. Vorrichtung nach Anspruch 1, **dadurch gekennzeichnet, dass** die Scheibenelemente (12, 13) um die zentrischen Ausnehmungen (16) synchron verdrehbar antreibbar sind.

3. Vorrichtung nach Anspruch 1 oder 2, **dadurch gekennzeichnet, dass** die Scheibenelemente (12, 13) in ihrer Ebene bewegbar sind.

4. Vorrichtung nach zumindest einem der vorhergehenden Ansprüche, **dadurch gekennzeichnet, dass** die Spannbacken (14, 15) eine einem Anlenkbalken (21) des Halteclips (1) entsprechende Form aufweisen.

5. Vorrichtung nach zumindest einem der vorhergehenden Ansprüche, **dadurch gekennzeichnet, dass** die Scheibenelemente (12, 13) C-förmig mit einer Einführöffnung (17) für das Leitungselement (2) gestaltet sind.

6. Vorrichtung nach zumindest einem der vorhergehenden Ansprüche, **dadurch gekennzeichnet, dass** der Bündelkopf (4, 5) zur Umwicklung des an dem Leitungselement (2) gehaltenen Halteclips (1) mit Band (6) seitlich neben den Scheibenelementen (12, 13) angeordnet ist.

7. Vorrichtung nach zumindest einem der vorhergehenden Ansprüche, **dadurch gekennzeichnet, dass** die Scheibenelemente (12, 13) sandwichartig zwischen zwei Bündelköpfen (4, 5) angeordnet sind.

8. Vorrichtung nach Anspruch 7, **dadurch gekennzeichnet, dass** die Bündelköpfe (4, 5) zumindest um die Breite des Halteclips (1) voneinander weg bewegbar geführt sind.

9. Vorrichtung nach zumindest einem der vorhergehenden Ansprüche, **dadurch gekennzeichnet, dass** ein Clipgreifer (23) zur Übergabe des Halteclips (1) aus zumindest einem Vorratsmagazin (11) zu den Spannbacken (14, 15) beweglich geführt ist.

10. Vorrichtung nach Anspruch 9, **dadurch gekennzeichnet, dass** der Clipgreifer (23) teleskopartig verfahrbar und schwenkbar gelagert ist.

11. Vorrichtung nach zumindest einem der Ansprüche 6 bis 10, **dadurch gekennzeichnet, dass** von der Spannenrichtung (3) aus gesehen hinter den Bündelköpfen (4, 5) jeweils ein Leitungsgreifer (10) angeordnet ist.

## Claims

1. A device for mounting a retaining clip (1) on a line element (2), having clamping device (3) for clamping the retaining clip (1) and alignment of the retaining clip (1) with respect to the line element (2), having a bundling head (4, 5) for guiding a band (6) connected or connectable to the retaining clip (1) around the line element (2), wherein the clamping device (3) has a disc element (12, 13) with a centric recess (16) for the line element (2), **characterized in that** the clamping device (3) has two disc elements (12, 13) with a centric recess (16) for the line element (2), which disc elements are arranged in parallel and can be rotated against each other about a common axis of rotation, and that the disc elements (12, 13) in each case have a clamping jaw (14, 15) for holding the retaining clip (1) between the clamping jaws (14, 15), wherein the disc elements (12, 13) can be rotated against each other, in order to move the clamping jaws (14, 15) towards or away from each other.

2. The device according to claim 1, **characterized in that** the disc elements (12, 13) can be driven synchronously and rotatably about the centric recesses (16).

3. The device according to claim 1 or 2, **characterized in that** the disc elements (12, 13) can be moved in their plane.

4. The device according to at least one of the preceding claims, **characterized in that** the clamping jaws (14, 15) have a shape corresponding to the articulation beam (21) of the retaining clip (1).

5. The device according to at least one of the preceding claims, **characterized in that** the disc elements (12,13) are C-shaped with an insertion opening (17) for the line element (2).

6. The device according to at least one of the preceding claims, **characterized in that** the bundling head (4, 5) for wrapping the retaining clip (1) held on the line element (2) is arranged with band (6) laterally next to the disc elements (12, 13).

7. The device according to at least one of the preceding claims, **characterized in that** the disc elements (12, 13) are arranged in a sandwich manner between two bundling heads (4, 5).

8. The device according to claim 7, **characterized in that** the bundling heads (4, 5) are guided so that they can be moved away from each other by at least the width of the retaining clip (1).

9. The device according to at least one of the preceding claims, **characterized in that** a clip gripper (23) is movably guided for transferring the retaining clip (1) from at least one supply magazine (11) to the clamping jaws (14, 15).

10. The device according to claim 9, **characterized in that** the clip gripper (23) is telescopically movable and pivotably mounted.

11. The device according to at least one of claims 6 to 10, **characterized in that**, viewed from the direction of the clamping (3), a line gripper (10) is arranged in each case behind the bundling heads (4, 5).

## Revendications

1. Dispositif pour le montage d'un clip de maintien (1) sur un élément conducteur (2), avec un dispositif de serrage (3) pour le serrage du clip de maintien (1) et l'orientation du clip de maintien (1) par rapport à l'élément conducteur (2), avec une tête de faisceau (4, 5) pour le guidage d'une bande (6) reliée ou pouvant être reliée avec le clip de maintien (1), autour de l'élément conducteur (2), dans lequel le dispositif de serrage (3) comprend un élément de disque (12, 13) avec un évidement central (16) pour l'élément conducteur (2), **caractérisé en ce que** le dispositif de serrage (3) comprend deux éléments en forme de disques (12, 13) disposés parallèlement, pouvant tourner l'un par rapport à l'autre autour d'un axe de rotation commun, avec des évidements centraux (16) pour l'élément conducteur (2) et **en ce que** les éléments en forme de disques (12, 13) comprennent chacun une mâchoire de serrage (14, 15) pour le maintien du clip de maintien (1) entre les mâchoires de serrage (14, 15), dans lequel les éléments en forme de disques (12, 13) peuvent tourner l'un par rapport à l'autre afin de rapprocher ou d'éloigner les mâchoires de serrage (14, 15) l'une de l'autre.

2. Dispositif selon la revendication 1, caractérisé e ce que les éléments en forme de disques (12, 13) peuvent être entraînés en rotation de manière synchrone autour des évidements centraux (16).

3. Dispositif selon la revendication 1 ou 2, **caractérisé en ce que** les éléments en forme de disques (12, 13) sont mobiles dans leur plan.

4. Dispositif selon au moins l'une des revendications précédentes, **caractérisé en ce que** les mâchoires de serrage (14, 15) comprennent une forme correspondant à une barre d'articulation (21) du clip de maintien (1).

5. Dispositif selon au moins l'une des revendications précédentes, **caractérisé en ce que** les éléments en forme de disques (12, 13) présentent une forme de C avec une ouverture d'introduction (17) pour l'élément conducteur (2).

6. Dispositif selon au moins l'une des revendications précédentes, **caractérisé en ce que** la tête de faisceau (4, 5) est disposée avec une bande (6) sur le côté des éléments en forme de disques (12, 13) pour l'enroulement du clip de maintien (1) maintenu sur l'élément conducteur (2).

7. Dispositif selon au moins l'une des revendications précédentes, **caractérisé en ce que** les éléments en forme de disques (12, 13) sont disposés en sandwich entre deux têtes de faisceaux (4, 5).

8. Dispositif selon la revendication 7, **caractérisé en ce que** les têtes de faisceaux (4, 5) sont guidées de façon à s'éloigner de la largeur du clip de maintien (1).

9. Dispositif selon au moins l'une des revendications précédentes, **caractérisé en ce qu'**un préhenseur de clip (23) est guidé de manière mobile pour le transfert du clip de maintien (1) hors d'au moins un magasin de réserve (11) vers les mâchoires de serrage (14, 15).

10. Dispositif selon la revendication 9, **caractérisé en ce que** le préhenseur de clip (23) est logé de manière mobile de manière télescopique et de manière pivotante.

11. Dispositif selon au moins l'une des revendications 6 à 10, **caractérisé en ce que**, vu du dispositif de serrage (3), derrière chacune des têtes de faisceaux (4, 5), est disposé un préhenseur de conducteur (10).
